# FASCICULE DE BREVET EUROPEEN

(11) **EP 1 957 228 B1**
(45) Date de publication et mention de la délivrance du brevet: **28.04.2010**
(21) Numéro de dépôt: 06831057.2
(22) Date de dépôt: 03.11.2006
(51) Int. Cl.: B23K 11/31, B25B 5/10

(54) **OUTIL DE SERRAGE COMPORTANT UN SYSTEME DE COMPENSATION AUTONOME**
KLEMM- ODER GREIFWERKZEUG MIT EINEM AUTONOMEN AUSGLEICHSSYSTEM
CLAMPING OR GRIPPING TOOL COMPRISING AN AUTONOMOUS COMPENSATION SYSTEM

(30) Priorité: 08.11.2005 FR 0511310; 28.04.2006 FR 0603820; 02.08.2006 FR 0607064
(43) Date de publication de la demande: 20.08.2008
(73) Titulaire: Salesse, Christian, 07100 Annonay (FR); Loriot, Jean-Marc, F-75015 Paris (FR)
(72) Inventeur: Salesse, Christian, 07100 Annonay (FR); Loriot, Jean-Marc, F-75015 Paris (FR)
(74) Mandataire: Bezault, Jean
(86) Numéro de dépôt international: PCT/FR2006/002454
(87) Numéro de publication internationale: WO 2007/054633

(56) Documents cités:
- WO-A-02/076665
- FR-A- 2 866 255

## Description

L'invention concerne un outil de serrage comportant un système de compensation propre à effectuer la réinitialisation de la position de pièces de contact afin d'effectuer notamment un rattrapage de leur usure.

Dans FR 2822401et WO 02/076665 A, les demandeurs ont décrit un outil de serrage qui consiste en un actionneur à gain mécanique variable.

Cet outil de serrage comporte un premier organe et un deuxième organe capables d'un déplacement relatif sous l'action d'un dispositif d'entraînement, ce dispositif comprenant une vis d'un pas donné propre à être entraînée en rotation autour d'un axe, dans un sens ou dans un sens opposé sous l'action d'un moteur, un écrou coopérant avec la vis et propre à être entraîné en translation dans la direction de l'axe de la vis, ledit écrou étant solidaire en translation du premier organe, des premiers moyens de guidage définissant un guidage linéaire parallèle à l'axe de la vis pour bloquer la rotation de l'écrou dans une première phase de déplacement de l'écrou, et des deuxièmes moyens de guidage définissant un guidage hélicoïdal qui s'étend suivant l'axe de la vis et qui a un pas inversé par rapport au pas de la vis pour permettre la rotation de l'écrou dans le même sens de rotation que la vis dans une deuxième phase de déplacement de l'écrou.

Ce dispositif d'entraînement présente un rapport cinématique variable avec une première phase de déplacement où l'écrou est bloqué en rotation et une deuxième phase de déplacement où l'écrou est entraîné en rotation dans le même sens que la vis, ce qui permet alors de diminuer le pas apparent de la vis, et donc la vitesse en translation de l'écrou, dans cette deuxième phase de déplacement. En supposant que la vis tourne à une vitesse angulaire constante, la vitesse en translation (vitesse linéaire) de l'écrou sera plus rapide dans la première phase de déplacement et elle diminuera jusqu'à éventuellement devenir nulle dans cette deuxième phase de déplacement.

Dans la demande PCT/FR05/00306, les demandeurs ont décrit un perfectionnement à l'outil de serrage du type ci-dessus qui réside dans un système de compensation interposé entre le premier organe et un support mobile solidaire de l'écrou pour réinitialiser la position de ce premier organe par rapport au deuxième organe, de sorte que les première et deuxième phases de déplacement engendrées par les premiers et deuxièmes moyens de guidage restent synchrones avec les phases nécessaires à une optimisation du déplacement du premier organe.

Ce système de compensation permet ainsi de réinitialiser ou calibrer périodiquement la position du premier organe par rapport à celle de l'écrou, et en particulier la position dudit premier organe lorsque l'écrou quitte les premiers moyens de guidage définissant un guidage linéaire pour aborder les deuxièmes moyens de guidage définissant un guidage hélicoïdal. Ainsi, lorsque l'écrou est muni d'éléments suiveurs, tels que des galets, ceci permet de réinitialiser la position du premier organe lorsque les galets quittent le guidage linéaire pour aborder le guidage hélicoïdal.

L'outil de serrage selon l'art antérieur mentionné ci-dessus peut être réalisé notamment sous la forme d'une pince, par exemple d'une pince à souder, ou encore d'un système dé freinage à disque.

L'invention vise à perfectionner un tel outil de serrage connu.

Elle vise notamment à perfectionner le système de compensation décrit dans la demande PCT/FR05/00306 qui présente l'inconvénient qu'il ne peut compenser un décalage intervenu, dans le temps, entre les premier et deuxième organes (spécialement lorsque ces organes sont des électrodes qui s'usent progressivement), sans l'adjonction d'un deuxième système d'actionneur.

L'invention a donc pour objet un outil de serrage comportant un premier organe et un deuxième organe capables d'un déplacement relatif sous l'action d'un dispositif d'entraînement, ce dispositif comprenant une vis d'un pas donné propre à être entraînée en rotation autour d'un axe, dans un sens ou dans un sens opposé sous l'action d'un moteur, un écrou coopérant avec la vis et propre à être entraîné en translation dans la direction de l'axe de la vis, ledit écrou étant solidaire en translation du premier organe, des premiers moyens de guidage définissant un guidage linéaire parallèle à l'axe de la vis pour bloquer la rotation de l'écrou dans une première phase de déplacement de l'écrou, et des deuxièmes moyens de guidage définissant un guidage hélicoïdal qui s'étend suivant l'axe de la vis et qui a un pas inversé par rapport au pas de la vis pour permettre la rotation de l'écrou dans le même sens de rotation que la vis dans une deuxième phase de déplacement de l'écrou, ainsi qu'un système de compensation interposé entre le premier organe et un support mobile solidaire de l'écrou pour réinitialiser la position de ce premier organe par rapport au deuxième organe, de sorte que les première et deuxième phases de déplacement engendrées par les premier et deuxième moyens de guidage restent synchrones avec les phases nécessaires à une optimisation du déplacement du premier organe.

Selon l'invention le système de compensation comprend un disque de rattrapage solidaire en rotation d'un moyeu vissé autour du support mobile, un disque de mesure monté sur le support mobile par l'intermédiaire d'un mécanisme à roue libre et au moins un ressort de stockage d'énergie interposé entre le disque de rattrapage et le disque de mesure, en sorte que la mise en mémoire de l'état d'usure des pièces est concrétisée par la position angulaire relative du disque de mesure et du support mobile. Pendant la deuxième phase de déplacement de l'écrou, la nécessité d'effectuer un rattrapage d'usure est avérée par la mise en butée du disque de mesure sur l'organe mobile, le disque de rattrapage alors entraîné en rotation par le moyeu venant comprimer le(s) ressort(s) jusqu'à la fin du mouvement du support mobile.

Ainsi, ce système de compensation se gère de manière complètement autonome sans aucune intervention extérieure de quelque sorte que ce soit. Il n'utilise donc aucun actionneur - autre que l'actionneur principal du mécanisme - pour effectuer la fonction de rattrapage qui consiste à rendre le mouvement des pièces d'usure synchrone avec les deux phases générées par l'actionneur de serrage principal.

D'autres caractéristiques, complémentaires ou alternatives de l'invention sont les suivantes :
- Le mécanisme à roue libre ne permet la rotation du support mobile dans le disque de mesure que dans un seul sens.
- Le(s) ressort(s) est (sont) calculé(s) pour stocker l'énergie nécessaire à l'opération de rattrapage et libérer cette énergie lorsque le niveau de contrainte entre le moyeu et le support mobile générera un couple résistant inférieur à celui produit par le(s) ressort(s) en compression, cette libération d'énergie ne pouvant se faire que par la rotation du disque de rattrapage du fait que le mécanisme à roue libre empêche le disque de mesure de tourner.
- Exceptionnellement, si l'espace à rattraper est trop important ou lorsque le(s) ressort(s) a (ont) atteint un taux de compression maximal, le disque de rattrapage et le disque de mesure sont bloqués en rotation, en entraînant ainsi un mouvement relatif entre le support mobile et le moyeu pour effectuer une phase de rattrapage en temps réel.
- Après la phase de rattrapage en temps réel et lorsque le niveau de contrainte entre le support mobile et le moyeu aura diminué, l'énergie stockée dans le(s) ressort(s) avant la phase de rattrapage en temps réel est apte à affiner ladite phase de rattrapage et faire retomber l'ensemble des contraintes générées dans la cinématique par cette opération.

L'invention vise aussi à perfectionner l'outil de serrage décrit dans FR 2822401 et la demande PCT/FR02/00444 qui consiste en un actionneur à gain mécanique variable. L'outil de serrage décrit dans ces deux publications comprend un écrou qui coopère, d'une part, de manière réversible, avec une vis entraînée en rotation par un moteur, et d'autre part, grâce à au moins un galet monté fou sur un axe perpendiculaire à celui de la vis, avec une douille constituée par une paroi cylindrique concentrique à la vis dans laquelle est taillée au moins une gorge hélicoïdale à pas variable mais inversé par rapport à celui de la vis, gorge dans laquelle roule le galet.

Dans cet outil de serrage connu, l'entraînement de la vis par le moteur va produire un déplacement longitudinal de l'écrou à une vitesse variable en fonction du pas de la gorge dans laquelle va rouler le galet.

La génération de l'effort axial, et le fait que le système vis-écrou est réversible va provoquer un transfert d'effort entre le galet et la douille qui va venir alléger la contrainte axiale à laquelle est soumise la vis. Ce transfert d'effort sera d'autant plus important que le pas de la gorge taillée dans la douille sera faible par rapport à celui de la vis. Comme le tracé de la gorge peut prendre une valeur de pas nulle, on comprendra que la valeur de l'effort entre le galet et la douille peut être très élevé.

L'invention a notamment pour but de surmonter cet inconvénient.

Elle vise en particulier à procurer un système permettant un transfert d'effort élevé entre le ou les galet(s) et la douille, tout en assurant une bonne fiabilité et un niveau de rendement élevé compatible avec les utilisations de ce système (actionneur d'outil de serrage, de frein électrique, de voilure aéronautique, etc.)

L'invention propose à cet effet que le galet présente un profil tronconique, tandis que la face de contact correspondant de la gorge est inclinée par rapport à l'axe du galet d'une valeur telle que l'augmentation de vitesse provoquée par l'éloignement du point de contact entre le galet et la gorge par rapport à l'axe de la vis soit intégralement compensée par l'augmentation du diamètre du galet en fonction de ce même éloignement. On assuré ainsi un contact continu et homogène entre le galet et la face de la gorge ne provoquant aucun glissement parasitaire quelles que soient les valeurs relatives de l'épaisseur de la paroi de la douille, de son diamètre et de celui du galet.

Il est avantageux de prévoir plusieurs galets coplanaires afin que les efforts que produit sur leur axe leur profil tronconique s'annulent et ne provoquent aucune contrainte sur la vis. On peut ainsi prévoir deux galets à 180°, trois galets à 120°, et ainsi de suite.

Selon une autre caractéristique de l'invention, on prévoit dans chaque galet une butée permettant de reprendre l'effort axial généré par le profil tronconique du galet.

Il est avantageux en outre de prévoir entre l'écrou et la vis un jeu supérieur à la valeur de la tolérance du centrage de l'écrou par les galets afin de soustraire la vis à tous phénomènes hyperstatiques qui pourraient la contraindre.

Dans la description qui suit, faite seulement à titre d'exemple, on se réfère aux dessins annexés, sur lesquels :
- la figure 1. est une vue en élévation, avec arrachement partiel, d'un outil de serrage conforme à l'art antérieur ;
- le figure 2 représente une partie de l'outil de serrage de la figure 1 incorporant un système de compensation selon l'art antérieur ;
- la figure 3 est une vue analogue à la figure 3, mais incorporant un système de compensation selon l'invention ;
- la figure 4 est une vue partielle du système de compensation suivant le flèche IV de la figure 3 ;
- la figure 5 représente un galet selon l'invention ; et
- la figure 6 est une vue en perspective avec arrachement d'un outil de serrage selon l'invention incorporant le système de compensation perfectionné et le galet perfectionné.

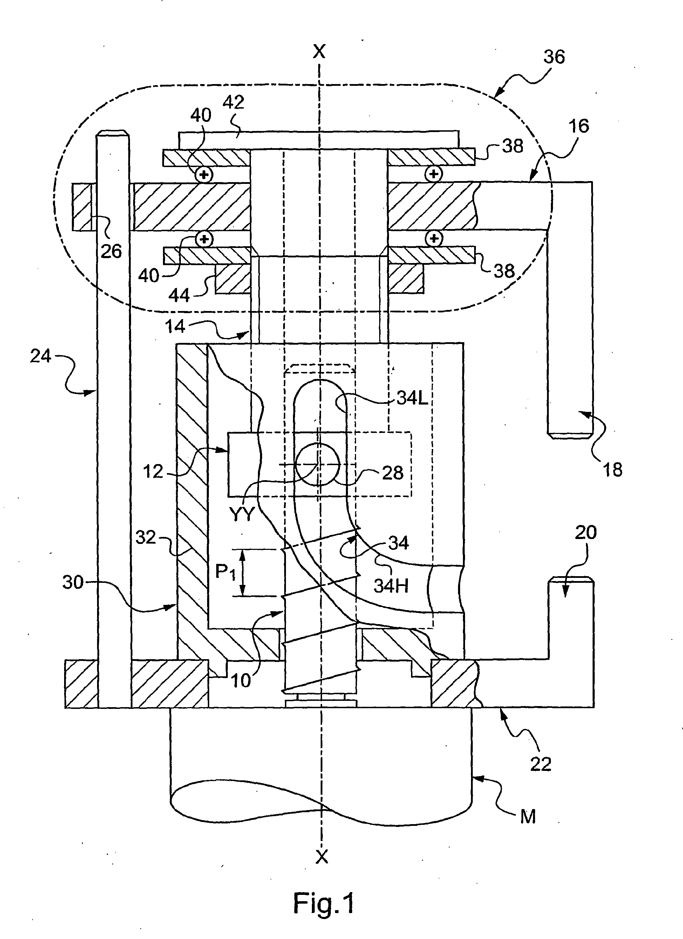

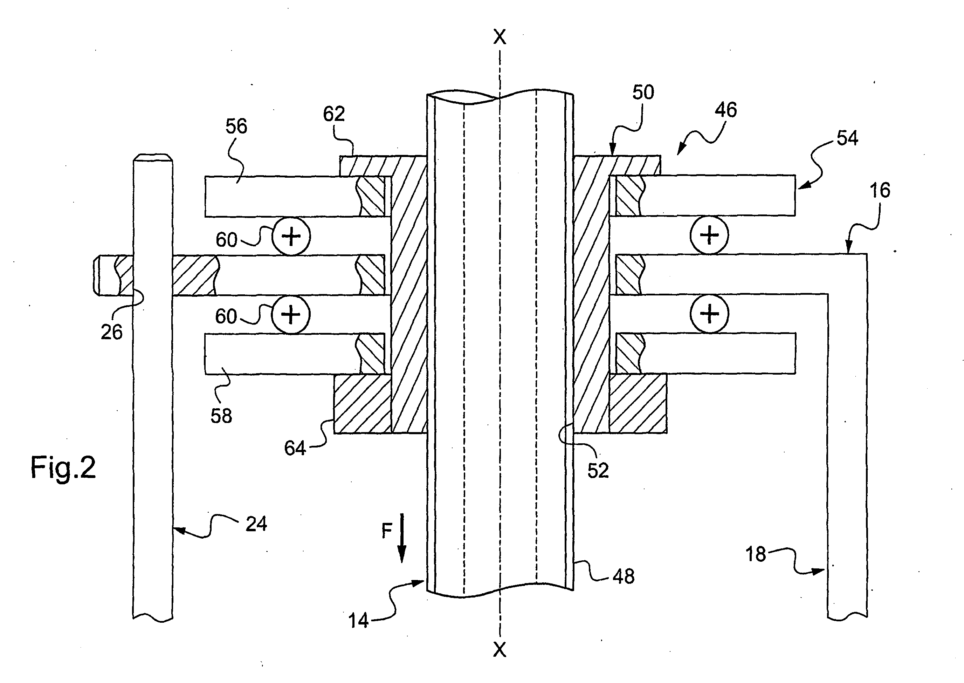

On se réfère d'abord aux figures 1 et 2 qui représentent un outil de serrage selon l'art antérieur et plus précisément selon la demande PCT/FR05/00306. L'outil de serrage est muni d'un dispositif de serrage comportant une vis 10 propre à être entraînée en rotation autour d'un axe XX par l'intermédiaire d'un moteur électrique M qui peut être couplé à une commande numérique.

Cette vis 10 possède un grand pas P1 et elle peut être entraînée en rotation dans un sens ou dans l'autre par le moteur M. La vis 10 coopère avec un écrou 12 susceptible d'être entraîné en translation dans la direction de l'axe XX de la vis. Cet écrou est solidaire d'un support 14, appelé aussi « support mobile », réalisé ici sous la forme d'un élément tubulaire qui entoure au moins en partie la vis 10.

Le support 14 est relié à une platine 16 qui porte un premier organe 18 (appelé aussi « organe mobile ») susceptible d'être déplacé en translation, dans une direction parallèle à l'axe XX, pour se rapprocher ou s'éloigner d'un deuxième organe 20 (appelé aussi « organe fixe ») porté par un support fixe 22 qui porte également le moteur M.

Une colonne 24 est fixée au support fixe 22 et s'étend dans une direction parallèle à l'axe XX pour assurer un guidage en translation du support mobile 14 portant l'organe mobile 18. La platine 16 est munie à cet effet d'un alésage axial 26 traversé par la colonne 24. Dans l'exemple particulier où l'outil de serrage est une pince à souder, l'organe mobile 18 et l'organe fixe 20 constituent respectivement une électrode et une contre-électrode.

Dans l'exemple de réalisation, le pas P1 de la vis 10 est un pas à droite dont la valeur est avantageusement de l'ordre de grandeur de son propre diamètre. L'écrou 12 est équipé d'une paire de galets 28 qui forment des éléments suiveurs et qui sont montés en rotation autour d'un axe YY qui est perpendiculaire à l'axe XX de la vis. Seul l'un des deux galets est visible sur la figure 1.

Le support fixe 22 porte un support cylindrique creux 30, encore appelé « douille creuse », qui présente une paroi cylindrique 32 dans laquelle sont taillées deux glissières opposées 34 (seule l'une des deux glissières est visible sur la figure 1). Les galets 28 précités sont agencés pour rouler respectivement dans les deux glissières 34 qui forment des moyens de guidage.

Chacune des glissières 34 comprend une partie linéaire 34L qui s'étend parallèlement à l'axe de la vis pour procurer un guidage linéaire à l'écrou 12, ainsi qu'une partie hélicoïdale 34H qui se raccorde à la partie linéaire 34L pour procurer un guidage hélicoïdal. Cette partie hélicoïdale s'étend suivant l'axe XX de la vis et possède un pas P2 qui est inversé par rapport au pas P1 de la vis, et qui est donc un pas à gauche dans l'exemple. Tant que les galets 28 sont en contact avec la partie 34L des glissières, ces dernières empêchent l'écrou de tourner ; et celui-ci peut se déplacer en translation avec une vitesse linéaire imposée par la vitesse angulaire du moteur et le pas P1 de la vis. Ceci constitue une première phase de déplacement D1, encore appelée course, que l'on peut qualifier de phase inertielle.

À l'approche du point de serrage, c'est-à-dire lorsque les galets 28 se rapprochent respectivement des parties hélicoïdales 34H, ces dernières entraînent l'écrou en rotation dans le même sens que la rotation de la vis. Il en résulte que la vitesse linéaire de l'écrou diminue jusqu'à éventuellement devenir nulle. En effet, ceci provient d'une variation apparente du pas (en fait, la vitesse linéaire de l'écrou est synchronisée sur le pas P2). Il est à noter que le pas P2 peut être constant ou variable. Si l'on suppose, par conséquent, que la vis 10 est entraînée en rotation autour de son axe avec une vitesse angulaire établie constante, l'écrou se déplace d'abord (dans le sens du serrage) avec une vitesse constante pour la phase D1 (phase inertielle) et ensuite avec une vitesse plus lente dans la deuxième phase D2.

Dans ce dispositif de serrage selon l'art antérieur, le support 14 est relié à la platine 16 de l'organe mobile 18 par une butée à billes désignée dans son ensemble par la référence 36, par laquelle le support mobile 14 reste en permanence solidaire en translation de l'organe mobile 18. Cette butée à billes 36 comprend deux contre-brides 38 disposées respectivement de part et d'autre de la platine 16 et prenant appui sur celle-ci par l'intermédiaire de billes 40. Les deux contre-brides 38 sont maintenues axialement entre une collerette 42 prévue à une extrémité du support mobile 14 et un écrou 44 vissé autour d'une autre extrémité du support mobile 14.

Le dispositif de serrage de l'art antérieur selon la figure 1 présente l'inconvénient qu'il ne peut compenser un décalage intervenu, dans le temps, entre les organes 18 et 20, spécialement lorsque ces organes sont des électrodes qui s'usent progressivement.

La figure 2 permet de remédier à cet inconvénient en remplaçant la butée à bille 36 de la figure 1 par un mécanisme ou système de compensation qui est interposé entre le premier organe 18 et le support mobile 14 (qui est solidaire de l'écrou 12) pour réinitialiser la position du premier organe 18 par rapport au deuxième organe 20, de sorte que les première et deuxième phases de déplacement D1 et D2 engendrées par les premier et deuxième moyens de guidage 34L et 34H restent synchrones avec les phases nécessaires à une optimisation du déplacement du premier organe 18.

Dans l'exemple de la figure 2, le système de compensation 46 comprend le support mobile 14, lequel est réalisé sous la forme d'un élément tubulaire solidaire de l'écrou 12 et muni d'un filetage extérieur 48, et il comprend en outre un moyeu 50 muni d'un taraudage intérieur 52 pour coopérer avec le filetage extérieur 48 du support mobile 14. Ce moyeu 50 supporte le premier organe 18 par l'intermédiaire d'une butée à billes 54, qui est réalisée sous la forme d'une butée à double effet comprenant la platine 16 et deux contre-brides 56 et 58 prenant appui sur la platine par l'intermédiaire de billes 60. Ces deux contre-brides sont maintenues axialement entre une collerette 62 formée à une extrémité du moyeu 50 et un écrou 64 vissé autour d'une autre extrémité du moyeu.

Le système de compensation 46 permet, à des fréquences définies selon le service de l'outil de serrage, une possibilité de réinitialisation de la position de l'organe mobile 18 par rapport à l'organe fixe 20, de sorte que les différentes phases de mouvement générées par les moyens de guidage du support cylindrique 30 (douille creuse) restent synchrones avec les phases de mouvement nécessaires à l'optimisation du mouvement de l'organe mobile 18.

Ce système de compensation permet, notamment, un déplacement longitudinal relatif de l'organe 18 suivant le sens de la flèche F par rapport à l'organe 20, afin de compenser les variations de leur écartement dues à leur usure. Ceci présente un intérêt tout particulier dans le cas où l'organe mobile 18 et l'organe fixe 20 constituent respectivement une éléctrode et une contre-électrode de pince à souder. Ce déplacement de l'organe mobile 18 obtenu par mouvement circulaire relatif entre le moyeu 50 et le support mobile 14 est, dans la demande PCT/FR05/00306, initié par un actionneur qui solidarise alternativement le moyeu 50 avec le support mobile 14 ou l'organe mobile 18. Dans la demande de brevet français 05/10911 du 26 octobre 2005 (non publiée), il est prévu une variante par l'adjonction d'un moteur auxiliaire indépendant du moteur principal de l'actionneur.

C'est pour palier cet inconvénient que la présente invention prévoit un système de rattrapage autonome ne nécessitant aucun autre actionneur ni organe de commande que le système de motorisation du serrage principal.

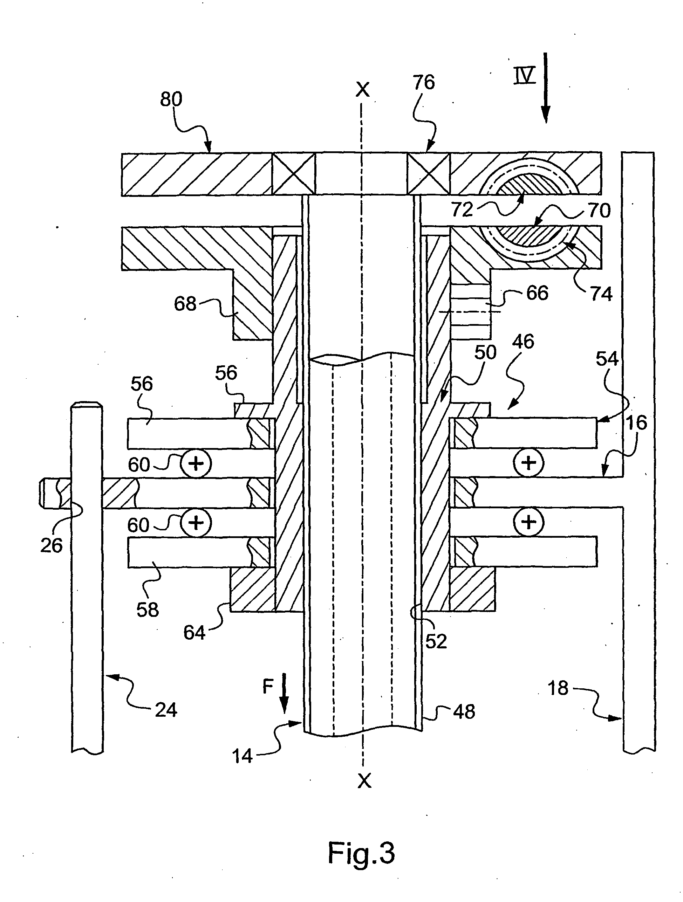

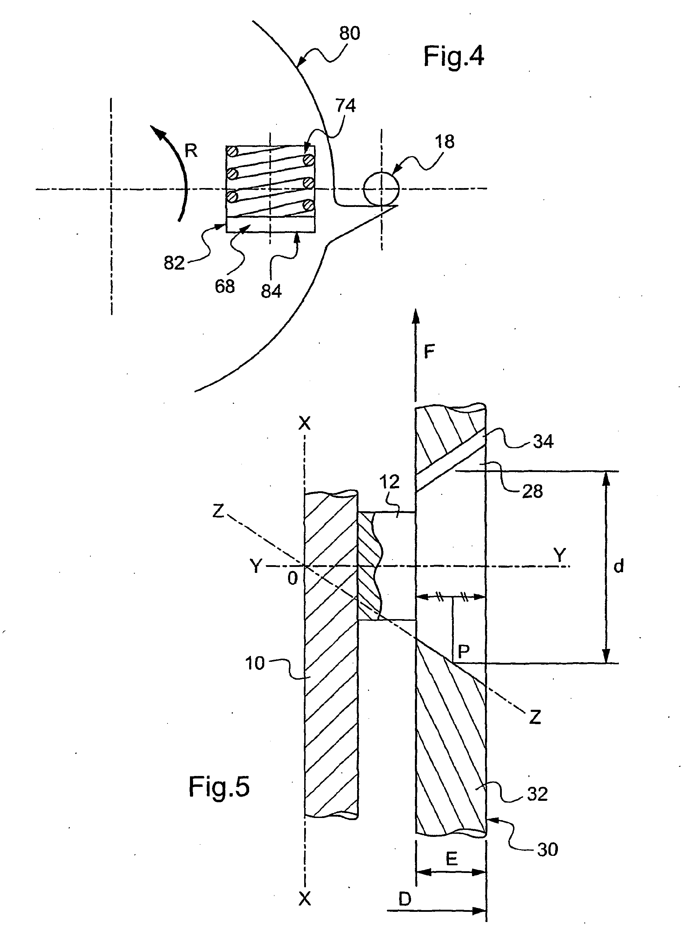

Il est fait maintenant référence aux figures 3 et 4. pour décrire le système de compensation de l'invention.

La figure 3 reprend la figure 2 à laquelle on a ajouté un premier disque 68 (ou « disque de rattrapage ») solidarisé en rotation au moyeu 50 par un doigt 66, ce disque pouvant ainsi se déplacer en translation sur ledit moyeu. Le moyeu 50 est, comme déjà indiqué, vissé autour du support mobile 14.

Un deuxième disque 80 (ou « disque de mesure ») est monté sur le support mobile 14 par l'intermédiaire d'un mécanisme 76. Ce mécanisme connu et non représenté est du type « roue libre de vélo » qui n'autorise la rotation du support mobile 14 par rapport au disque 80 que dans un seul sens R (figure 4). Au moins un ressort 74 de stockage d'énergie est interposé entre les disques 68 et 80. Dans l'exemple le ressort 74 est un ressort de compression et il se loge dans une fenêtre aménagée dans le disque 68 et dans une autre fenêtre aménagée dans le disque 80.

Le ressort équipé de ses deux demi-guides 70 et 72 assure la position longitudinale du disque 68 par rapport au disque 80. L'organe mobile 18 est prolongé jusqu'au niveau du disque 80 dont il peut dans certaines conditions en stopper la rotation.

La figure 4 est une vue suivant la flèche IV du montage représenté figure 3 et dans laquelle on voit notamment le disque 80 venir en appui sur l'organe mobile 18 grâce à un ergot présent à la périphérie du disque 80. Lors de la phase de serrage (le galet 28 est dans la partie 34H de la gorge de la figure 1), l'ensemble des deux disques 68 et 80 va tourner dans le sens de la flèche R. Si l'on considère que le niveau d'usure des organes 18 et 20 (figure 1) atteint un seuil nécessitant un rattrapage de cette usure, l'angle de rotation du support mobile 14 sera tel que le disque 80 viendra au contact de l'organe 18. Or dans cette phase de serrage, l'effort transmis par la liaison du support mobile 14 au moyeu 50 est tel que le frottement engendré sur le filetage qui sépare ces deux pièces, les solidarise, de sorte que, le disque 80 étant arrêté et le disque 68 tournant, la face 82 du disque 68 va donc se déplacer par rapport à la face 84 du disque 80. On va donc comprimer le ressort 74 et cette compression va se poursuivre jusqu'à la fin du mouvement du support mobile 14.

Autrement dit, la mise en mémoire de l'état d'usure des pièces est concrétisée par la position angulaire relative du disque de mesure 80 par rapport au support mobile 14, le disque de mesure 80 étant bloqué en butée positive sur l'organe mobile 18 alors que le disque de rattrapage 68 qui comprime le(s) ressort(s) 74 est entraîné en rotation par le moyeu 50 qui est solidarisé en rotation avec le support mobile 14 à cause de l'effort transféré par le moyeu 50 et le support mobile 14 .

On notera que pendant cette phase le mécanisme 76 permet la rotation du support mobile 14 dans le disque 80 suivant la flèche R. Pendant la phase de desserrage, le support mobile 14 va tourner en sens inverse de la flèche R et dans ce cas entraîner, grâce au mécanisme 76, le disque 80 dans son mouvement. Le ressort 74 pourra alors faire tourner le moyeu 50 par rapport au support mobile 14 lorsque le niveau de contrainte entre ces deux pièces sera suffisamment faible pour autoriser ce déplacement, c'est-à-dire, lorsque les organes 18 et 20 (figure 1) ne seront plus en contact, c'est dans ce mouvement que s'effectue l'opération de rattrapage.

Si un déréglage important faisait que le disque de mesure 80 rentrait en butée avec l'organe mobile 18 avant qu'une réelle contrainte n'apparaisse entre le support mobile 14 et le moyeu 50, le disque 80 entraînerait au travers du ressort 74 la rotation du moyeu 50. Il y aurait donc une phase de rattrapage en temps réel. Celle-ci cesserait dès que la contrainte entre le moyeu 50 et le support mobile 14 atteindrait une valeur suffisante pour solidariser ces deux pièces et provoquer ainsi la compression du ressort 74 par déplacement relatif du disque de mesure 80 et du disque de rattrapage 68 alors entraîné en rotation par le moyeu 50.

Ce processus de rattrapage différé se fera d'autant plus facilement que le pas souvent décroissant des gorges du support (douille) 30 (figure 1) en fonction du serrage sera à ce moment là supérieur en valeur au pas fixe du filetage qui relie le moyeu 50 au support mobile 14 (il est à rappeler que, lorsque le rattrapage s'effectue réellement, les organes 18 et 20 ne se touchent plus).

En pratique, si on considère qu'en fin de serrage le pas des gorges de la douille a une valeur de l'ordre de 1 mm, on aura intérêt, dans la plupart des cas, à prendre une valeur de cet ordre pour celui du filetage en question, toutefois l'efficacité du rattrapage peut amener à prendre des valeurs supérieures. Le fait de monter le ressort 74 dans deux fenêtres des disques 68 et 80 comporte l'avantage de faire travailler ce ressort en précontrainte, même lorsqu'il n'est pas sollicité, c'est-à-dire lorsque les faces 82 du disque 68 et 84 du disque 80 sont coplanaires. En outre, cette mise en précontrainte du ressort 74 est un garant de sa longévité.

Cette particularité permet de mieux maîtrisér les phénomènes d'hystérésis du ressort et le frottement résiduel entre le moyeu 50 et le support 14 qui altèrent la fidélité du système. Elle permet aussi de mieux positionner les caractéristiques dudit ressort par rapport au seuil de contrainte permettant ou non la rotation du moyeu 50 sur le support 14. Enfin, si elle impose un guidage efficace du ressort par les demi-guides 70 et 72, elle évite toute opération de réglage, donc de déréglage intempestif du ressort 74. En pratique, on prévoirà la mise en place de plusieurs ressorts 74 sur un même équipement, en variante on pourra adopter un système de ressort spirale entre les disques 68 et 80.

Ce fonctionnement simple et entièrement autonome ne perturbera pas de manière significative le fonctionnement du seul moteur M de la figure 1, par contre il ne permet que des rattrapages de petites amplitudes donc fréquents. Par ailleurs, les dits rattrapages ne seront effectués que lorsque l'effort entre les organes 18 et 20 atteindra son niveau maximum. Il paraît souhaitable, pour les freins de véhicules automobiles, de systématiser cette opération à chaque arrêt du véhicule, ceci en marge des freinages aux conditions maximum d'effort. On reconnaît donc bien, dans cette description, les différents points de l'invention à savoir une mise en mémoire de l'état des pièces d'usure qui est matérialisée par la position angulaire du disque 80 par rapport au support 14, définie par le mécanisme 76 (cette mise en mémoire est bien sûr combinée à la position longitudinale du moyeu 50). La mesure de l'usure stockant l'énergie dans le ressort 74 qui la libère lorsque le niveau de contrainte entre le moyeu 50 et le support 14 est suffisamment faible pour permettre l'ajustement de la position relative de ces deux pièces dans les meilleures conditions de précision d'usure de ces composants et pour une consommation d'énergie minimale.

Toutefois l'invention prévoit aussi, pour des raisons de sécurité évidentes, que si l'espace à rattraper est très grand (donc si l'opération de rattrapage n'a pas été faite depuis un temps trop long), on puisse, d'une part, faire automatiquement par logiciel, et après un freinage imparfait, un « défreinage » suivi d'un freinage immédiat (analogue au « pompage » qu'effectuent aujourd'hui les conducteurs de véhicules pour éviter un patinage des roues) afin d'effectuer le rattrapage d'usure alors mis en mémoire par la rotation du disque 80, lors du premier freinage imparfait et retrouver alors les conditions de fonctionnement correctes, cette séquence pouvant se répéter et, d'autre part, par un système (non représenté sur le dessin) bloquer la rotation relative du disque 68 par rapport au disque 80, par exemple lorsque le ressort 74 a atteint son taux de compression maximum. Ce blocage du disque 68 peut être fait par une mise en butée sur l'organe 18 décalée dans l'espace par rapport à celle du disque 80. Dans ce cas, la rotation du support 14 va entraîner directement une phase de rattrapage puisque le disque 68, donc le moyeu 50, sont solidaires en rotation. Cette opération doit rester exceptionnelle car, sous la contrainte, elle entraîne une usure importante du filetage entre le moyeu 50 et le support 14 et une surcharge du moteur. Enfin, l'énergie stockée dans le ressort 74 pendant la période qui a précédé cette phase va dans un second temps ajuster avec précision la position du moyeu 50 et du support 14 lorsque leur liaison ne sera plus contrainte. Elle fera retomber l'ensemble des contraintes générées par cette opération de rattrapage en temps réel dans la cinématique.

Si on admet que cette opération de rattrapage en temps réel n'est plus exceptionnelle, mais peut être systématisée, le mécanisme décrit dans la figure 3 peut se simplifier considérablement puisque c'est le moyeu 50 qui peut lui-même directement venir en butée sur l'organe 18. On supprime alors le disque 80, le mécanisme 76, le ressort 74 et le disque 68. Cette éventualité, il faut le répéter, ne paraît pas réaliste tant elle compromet (à cause de la contrainte entre toutes les pièces en mouvement relatif les unes par rapport aux autres pendant cette phase de rattrapage) la fiabilité du système dans le temps par un taux d'usure élevé desdites pièces. Elle augmente considérablement le niveau d'énergie nécessaire à la réalisation de l'opération, elle altère la précision de positionnement, ne permet pas de libération des contraintes résiduelles dans l'ensemble de la cinématique, enfin elle surcharge considérablement le moteur en terme de puissance à fournir. On notera que, dans le cas où l'outil de serrage de l'invention est utilisé dans un système de frein à disque, il y a lieu de réinitialiser la position du mécanisme 76 et du moyeu 50 à chaque changement de plaquettes de frein. Il y aura également lieu de faire cette opération pour tout remplacement des pièces d'usure, qu'elle que soit l'application.

En variante, le mécanisme à roue libre 76 peut être remplacé par un embrayage qui solidarise, ou laisse libre en rotation, le disque 80 et le support mobile 14. Par ailleurs, le blocage en rotation du même disque 80 et de la pièce 18 peut être, lui aussi, activé ou non suivant un programme précis et ne plus être systématisé par une mise en butée positive. Ainsi, l'organe de commande peut programmer seul la phase de réinitialisation qui intégrerait par exemple une « augmentation » de la dimension des plaquettes de frein, due à un échauffement excessif de la mécanique.

On se réfère maintenant à la figure 5, sur laquelle on reconnaît la vis 10 qui fait avec l'écrou 12 un système réversible et qui peut être entraînée en rotation sur son axe XX par un moteur non représenté. L'écrou 12 porte au moins un galet 28 monté libre en rotation sur son axe YY et qui prend appui sur la paroi 32 qui fait partie du support creux 30, aussi appelé douille creuse. Cette paroi 32 est cylindrique suivant l'axe XX de telle sorte qu'elle est concentrique à la vis 10. Le galet 28 se déplace dans une gorge hélicoïdale 34 à pas variable, de sens inversé par rapport à celui de la vis 10, taillée dans ladite paroi 32. Cette gorge 34 constitue une glissière comme défini plus haut en liaison avec la figure 1. La mise en rotation de la vis 10 va entraîner un déplacement longitudinal de l'écrou 12 donc, suivant le sens de rotation du moteur et le pas de la vis 10, la génération de la force F. Le système vis écrou 10-12 étant réversible, l'écrou va se déplacer en suivant, par le galet 28, le pas de la gorge 34 taillée dans la douille creuse 30.

Ainsi une part importante de l'effort F va être généré par l'appui du galet 28 sur la douille 30. Cette part sera d'autant plus importante que le pas de la gorge 34 de la douille 30 sera faible par rapport au pas de la vis 10. On a vu que, lorsque le pas de la douille 30 est nul, on a une phase d'irréversibilité intrinsèque qui soustrait la vis 10 à tout effort axial.

Le but de l'invention est donc de permettre un transfert d'effort entre le galet 28 et la douille 30 le plus performant possible. Il s'agit donc d'adopter un profil de galet et de gorge assurant le meilleur rendement possible en supprimant tout glissement parasitaire et en assurant la parfaite égalité des vitesses des pièces en contact et ceci pour tous les points de contact. Il faut donc que le diamètre du galet 28 croisse proportionnellement au rayon autour de l'axe XX du point de contact correspondant sur la douille 30.

Cette configuration est obtenue quand la face de contact entre le galet 28 et la douille 30 est confondue avec l'axe ZZ qui relie le point de rencontre O des axes XX et YY et le point P qui correspond au point de contact entre la douille 30 et le galet 28 au niveau du diamètre moyen d de ce dernier.

Cette configuration assure bien un contact intime et sans glissement parasitaire entre ces deux pièces quelles que soient les valeurs de D (diamètre de la douille 30), d (diamètre moyen des galets 28) et E (épaisseur de la paroi 32 de la douille 30).

Bien évidemment, le nombre des galets et leur disposition (deux à 180°, trois à 120° et ainsi de suite) seront tels que l'on ne ramène aucune contrainte particulière sur la vis à cause de l'effort axial généré sur chaque galet par sa forme tronconique.

Le montage des galets 28 sur leurs axes respectifs comportera une butée afin de reprendre ledit effort axial. Cette butée n'est pas représentée sur la figure 5.

Enfin, le jeu mécanique entre l'écrou 12 et la vis 10 sera tel que le centrage produit par les galets 28 et la douille 30 ne ramène sur la vis aucune contrainte. En fait, la valeur de ce jeu sera nettement supérieure à celle de la précision de réalisation du centrage de la douille 30 et des galets 28, afin de ne pas créer de système hyperstatique.

Par ailleurs, cette configuration susceptible de transférer des charges importantes est particulièrement intéressante dans le cas d'application de presses (manuelles ou motorisées). Plus généralement, en rationalisant les conditions de transfert entre les galets et le support creux (douille), elle permet de réduire au minimum l'encombrement de l'ensemble de la cinématique pour une charge donnée.

On notera enfin que le centrage de la douille 30 et des galets tronconiques 28 sur l'écrou 12 peut être un guidage linéaire intéressant pour l'ensemble du système mobile dans certaines configurations.

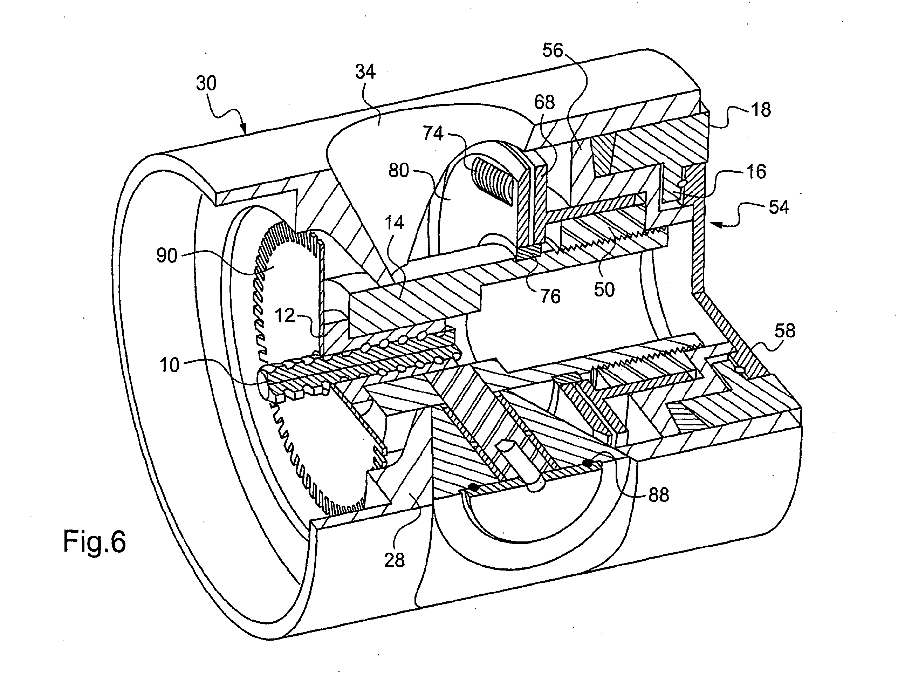

On se réfère maintenant à la figure 6 qui représente un outil de serrage réalisé sous la forme d'un actionneur électrique qui trouve une application préférentielle dans la commande d'un système de freinage à disques pour véhicule automobile.

On reconnaît la vis 10 qui coopère avec l'écrou 12 solidaire du support mobile 14, lequel support entoure au moins en partie la vis 10. L'écrou est équipé de deux galets 28 à paroi tronconique, disposés à 180°, qui coopèrent avec des gorges respectives 34 de forme hélicoïdale à pas variable qui sont taillées dans le support creux (douille creuse) 30. Chacun des galets 28 loge une butée 88, ici une butée à billes, pour reprendre l'effort axial généré par le profil tronconique du galet.

On reconnaît aussi le système de compensation ou de rattrape d'usure décrit précédemment. Celui-ci comprend un moyeu 50 muni d'un taraudage intérieur pour coopérer avec le filetage extérieur du support mobile 14. Le moyeu 50 supporte le premier organe 18 (organe mobile) par l'intermédiaire d'une butée à roulement 54 qui est réalisée sous la forme d'une butée à double effet comprenant la platine 16 et les deux contre-brides 56 et 58 mentionnées précédemment. L'organe mobile 18 peut former un piston d'actionnement susceptible d'agir contre un disque de frein (non représenté).

La figure 6 montre aussi le premier disque 68 (disque de rattrapage) solidaire en rotation du moyeu 50 et le deuxième disque 80 (disque de mesure) monté sur le support mobile 14 par un mécanisme 76 du type à roue libre. Au moins un ressort 74 du type décrit précédemment (figures 3 et 4) est logé à chaque fois dans une fenêtre du disque 68 et dans une fenêtre du disque 80. Dans l'exemple, la position longitudinale du disque 68 par rapport au disque 80 (le disque 68 ne doit pas suivre le moyeu 50 dans son déplacement longitudinal) est réalisé par un maintien en translation (non représenté) du disque 68 sur le mécanisme à roue libre 76, et non par les guidages du ou des ressorts 74.

Dans l'exemple considéré, la vis 10 est susceptible d'être entraînée en rotation, dans un sens ou dans l'autre par un moteur électrique (non représenté) et l'écrou 12 est muni d'un capteur 90 en forme de disque pour détecter sa position angulaire. L'outil ou actionneur est de conception particulièrement compacte puisqu'il comprend un corps généralement cylindrique formé par la douille 30. Une extrémité de la douille 30 est aménagée en forme de collerette pour recevoir le moteur électrique, tandis que son autre extrémité loge l'organe mobile 28, c'est-à-dire ici le piston d'actionnement d'un frein à disque. La vis 12 est de préférence formée directement sur l'arbre de sortie du moteur électrique. Elle peut présenter, par exemple pour de gros freins dont la poussée est de 100kN , un diamètre de 20mm et un pas de 16m. Le capteur 90 permet de mesurer la position angulaire du support 14 et ainsi d'apprécier l'état d'usure des plaquettes de frein avec une très grande précision.

On procure ainsi un frein électrique de faible encombrement intégrant un système de compensation ou de rattrapage d'usure particulièrement performant.

## Revendications

1. Outil de serrage comportant un premier organe (18) et un deuxième organe (20) capables d'un déplacement relatif sous l'action d'un dispositif d'entraînement, ce dispositif comprenant une vis (10) d'un pas donné (P1) propre à être entraînée en rotation autour d'un axe (XX), dans un sens ou dans un sens opposé sous l'action d'un moteur (M), un écrou (12) coopérant avec la vis (10) et propre à être entraîné en translation dans la direction de l'axe (XX) de la vis, ledit écrou étant solidaire en translation du premier organe (18), des premiers moyens de guidage (34L) définissant un guidage linéaire parallèle à l'axe (XX) de la vis (10) pour bloquer la rotation de l'écrou (12) dans une première phase de déplacement (D1) de l'écrou, et des deuxièmes moyens de guidage (34H) définissant un guidage hélicoïdal qui s'étend suivant l'axe (XX) de la vis (10) et qui a un pas (P2) inversé par rapport au pas (P1) de la vis pour permettre la rotation de l'écrou (12), dans le même sens de rotation que la vis (10) dans une deuxième phase de déplacement (D2) de l'écrou (12), ainsi qu'un système de compensation (46) interposé entre le premier organe (18) et un support mobile (14) solidaire de l'écrou (12) pour réinitialiser la position de ce premier organe (18) par rapport au deuxième organe (20), de sorte que les première et deuxième phases de déplacement engendrées par les premier et deuxième moyens de guidage (34L et 34H) restent synchrones avec les phases nécessaires à une optimisation du déplacement du premier organe,
**caractérisé en ce que** le système de compensation comprend un disque de rattrapage (68) solidaire en rotation d'un moyeu (50) vissé autour du support mobile (14), un disque de mesure (80) monté sur le support mobile (14) par l'intermédiaire d'un mécanisme à roue libre (76) et au moins un ressort (74) de stockage d'énergie interposé entre le disque de rattrapage (68) et le disque de mesure (80), en sorte que la mise en mémoire de l'état d'usure des pièces est concrétisée par la position angulaire relative du disque de mesure (80) et du support mobile (14), et **en ce que**, pendant la deuxième phase de déplacement (D2) de l'écrou (12), la nécessité d'effectuer un rattrapage d'usure est avérée par la mise en butée du disque de mesure (80) sur l'organe mobile (18), le disque de rattrapage (68) alors entraîné en rotation par le moyeu (50) venant comprimer le(s) ressort(s) (74) jusqu'à la fin du mouvement du support mobile (14).

2. Outil de serrage selon la revendication 1, **caractérisé en ce que** le mécanisme à roue libre (76) ne permet la rotation du support mobile (14) dans le disque de mesure (80) que dans un seul sens (R) .

3. Outil de serrage selon l'une des revendications 1 et 2, **caractérisé en ce que** le(s) ressort(s) (74) est (sont) calculé(s) pour stocker l'énergie nécessaire à l'opération de rattrapage et libérer cette énergie lorsque le niveau de contrainte entre le moyeu (50) et le support mobile (14) générera un couple résistant inférieur à celui produit par le(s) ressort(s) en compression, cette libération d'énergie ne pouvant se faire que par la rotation du disque de rattrapage (68) du fait que le mécanisme à roue libre (76) empêche le disque de mesure (80) de tourner.

4. Outil de serrage selon l'une des revendications 1 à 3, **caractérisé en ce que**, exceptionnellement, si l'espace à rattraper est trop important ou lorsque le(s) ressort(s) (74) a (ont) atteint un taux de compression maximal, le disque de rattrapage (68) et le disque de mesure (80) sont bloqués en rotation, en entraînant ainsi un mouvement relatif entre le support mobile (14) et le moyeu (50) pour effectuer une phase de rattrapage en temps réel.

5. Outil de serrage selon la revendication 4, **caractérisé en ce que**, après la phase de rattrapage en temps réel et lorsque le niveau de contrainte entre le support mobile (14) et le moyeu (50) aura diminué, l'énergie stockée dans le(s) ressort(s) (74) avant la phase de rattrapage en temps réel est apte à affiner ladite phase de rattrapage et faire retomber l'ensemble des contraintes générées dans la cinématique par cette opération.

6. Outil de serrage selon l'une des revendications 1 à 5, dans lequel l'écrou (12) coopère, grâce à au moins un galet (28) monté fou sur un axe (YY) perpendiculaire à l'axe (XX) de la vis (10), avec une douille (30) constituée par une paroi cylindrique (32) concentrique à la vis (10) et dans laquelle est taillée au moins une gorge hélicoïdale (34) à pas variable mais de sens inversé par rapport à celui de la vis, gorge dans laquelle roule le galet (28), **caractérisé en ce que** le galet (28) présente un profil tronconique, tandis que la face de contact correspondant de la gorge (34) est inclinée par rapport à l'axe (YY) du galet (28) d'une valeur telle que l'augmentation de vitesse provoquée par l'éloignement de l'axe (XX) du point de contact entre le galet (28) et la paroi cylindrique (32) soit intégralement compensée par l'augmentation du diamètre du galet (28) en fonction de ce même éloignement, assurant ainsi un contact continu et homogène entre le galet (28) et la face de la gorge (34), ne provoquant aucun glissement parasitaire, quelles que soient les valeurs relatives de l'épaisseur (E) de la paroi cylindrique (32) de la douille, du diamètre (D) de la douille et du diamètre (d) du galet (28).

7. Outil de serrage selon la revendication 6, **caractérisé en ce qu'**il comprend plusieurs galets (28) coplanaires afin que les efforts, que produit sur leur axe leur profil tronconique, s'annulent et ne provoquent aucune contrainte sur la vis.

8. Outil de serrage selon la revendication 7, **caractérisé en ce qu'**il comprend deux galets à 180° ou trois galets à 120°.

9. Outil de serrage selon l'une des revendications 6 à 8, **caractérisé en ce que** dans chaque galet (28) est prévue une butée (88) permettant de reprendre l'effort axial généré par le profil tronconique du galet.

10. Outil de serrage selon la revendication 6, **caractérisé en ce qu'**entre la vis (10) et l'écrou (12) est prévu un jeu mécanique supérieur à la valeur de la tolérance du centrage de l'écrou (12) par les galets (28) afin de soustraire la vis (10) à tous phénomènes hyperstatiques qui pourraient la contraindre.

## Claims

1. Clamping tool comprising a first member (18) and a second member (20) capable of a relative displacement under the action of a drive device, this device comprising a screw (10) of a given pitch (P1) capable of being rotatably driven about an axis (XX) in one direction or in the opposite direction under the action of a motor (M), a nut (12) co-operating with the screw (10) and capable of being translationally displaced in the direction of the axis (XX) of the screw, the said nut moving translationally as one with the first member (18), first guide means (34L) defining a linear guidance parallel to the axis (XX) of the screw (10) in order to prevent the rotation of the nut (12) in a first displacement phase (D1) of the nut, and second guide means (34H) defining a helical guidance that extends along the axis (XX) of the screw (10) and which has a pitch (P2) that is opposite to the pitch (P1) of the screw in order to permit the rotation of the nut (12) in the same direction of rotation as the screw (10) in a second displacement phase (D2) of the nut (12), as well as a compensation system (46) arranged between the first member (18) and a mobile support (14) integral with the nut (12) in order to reset the position of this first member (18) with respect to the second member (20), so that the first and second displacement phases produced by the first and second guide means (34L) and (34H) remain synchronous with the phases necessary for an optimisation of the displacement of the first member, **characterised in that** the compensation system comprises a compensating disc (68) rotating as one with a hub (50) screwed about the mobile support (14), a measurement disc (80) mounted on the mobile support (14) by means of a freewheel mechanism (76), and at least one energy-storing spring (74) arranged between the compensating disc (68) and the measurement disc (80), so that the memorising of the degree of wear of the parts is specified by the relative angular position of the measurement disc (80) and of the mobile support (14), and **in that**, during the second displacement phase (D2) of the nut (12), the need to carry out a wear compensation is established by the abutment of the measurement disc (80) against the mobile member (18), the compensating disc (68) being rotatably driven by the hub (50) then compressing the spring or springs (74) until the mobile support (14) no longer moves.

2. Clamping tool according to claim 1, **characterised in that** the freewheel mechanism (76) permits the rotation of the mobile support (14) in the measurement disc (80) only in one direction (R).

3. Clamping tool according to one of claims 1 and 2, **characterised in that** the spring or springs (74) is/are dimensioned so as to store the energy required for the compensation operation and to release this energy when the constraint level between the hub (50) and the mobile support (14) generates a resistance couple less than that produced by the spring or springs under compression, this release of energy being able to take place only by the rotation of the compensating disc (68) on account of the fact that the freewheel mechanism (76) prevents the measurement disc (80) rotating.

4. Clamping tool according to one of claims 1 to 3, **characterised in that**, in exceptional cases, if the gap to be compensated is too large or if the spring or springs (74) has/have reached a stage of maximum compression, the compensating disc (68) and the measurement disc (80) are prevented from rotating, thereby producing a relative movement between the mobile support (14) and the hub (50) so as to effect a compensation phase in real time.

5. Clamping tool according to claim 4, **characterised in that**, after the compensation phase in real time and when the constraint level between the mobile support (14) and the hub (50) has decreased, the energy stored in the spring or springs (74) before the compensation phase in real time is capable of refining the said compensation phase and of dissipating all the constraints generated in the kinematics by this operation.

6. Clamping tool according to one of claims 1 to 5, in which the nut (12) co-operates, by means of at least one roller (28) loosely mounted on an axis (YY) perpendicular to the axis (XX) of the screw (10), with a bushing (30) consisting of a cylindrical wall (32) concentric to the screw (10) and in which is cut at least one helical groove (34) of variable but opposite pitch with respect to that of the screw, in which groove the roller (28) rolls, **characterised in that** the roller (28) has a truncated conical shape, while the corresponding contact surface of the groove (34) is inclined with respect to the axis (YY) of the roller (28) by a value such that the increase in velocity produced by the distance of the axis (XX) from the point of contact between the roller (28) and the cylindrical wall (32) is wholly compensated by the increase in diameter of the roller (28) as a function of this same distance, thereby ensuring a continuous and homogenous contact between the roller (28) and the surface of the groove (34), without producing any interfering sliding, regardless of the relative values of the thickness (E) of the cylindrical wall (32) of the bushing, the diameter (D) of the bushing, and the diameter (d) of the roller (28).

7. Clamping tool according to claim 6, **characterised in that** it comprises a plurality of coplanar rollers (28) so that the forces that are produced on their axis by their truncated conical shape cancel out and do not produce any constraint on the screw.

8. Clamping tool according to claim 7, **characterised in that** it comprises two rollers at 180° or three rollers at 120°.

9. Clamping tool according to one of claims 6 to 8, **characterised in that** in each roller (28) there is provided an abutment (88) enabling the axial force generated by the truncated conical shape of the roller to be absorbed.

10. Clamping tool according to claim 6, **characterised in that** between the screw (10) and the nut (12) there is provided a mechanical clearance greater than the value of the tolerance of the centring of the nut (12) by the rollers (28), in order to protect the screw (10) against all hyperstatic phenomena that could constrain it.

## Patentansprüche

1. Klemm- oder Greifwerkzeug mit einem ersten Organ (18) und einem zweiten Organ (20), die eine Relativbewegung unter der Einwirkung einer Antriebsvorrichtung ausführen können, wobei diese Vorrichtung eine Schraube (10) einer vorgegebenen Steigung (P1) aufweist, die in der Lage ist, um eine Achse (XX) in Bewegung versetzt zu werden, in eine Richtung oder in eine engtgegengesetzte Richtung unter Einwirkung eines Motors (M), wobei eine Mutter (12) mit der Schraube (10) zusammenwirkt, und in der Lage ist, in die Richtung der Achse (XX) der Schraube translatorisch bewegt zu werden, wobei die Mutter bei der Verschiebung mit dem ersten Organ (18) verbunden ist, wobei die ersten Führungseinrichtungen (34L) eine lineare Führung parallel zur Achse (XX) der Schraube (10) definieren, um die Drehung der Mutter (12) in einer ersten Phase der Bewegung (D1) der Mutter zu blockieren, und wobei zweite Führungseinrichtungen (34H) eine schraubenförmige Führung definieren, die sich entlang der Achse (XX) der Schraube (10) erstreckt, und die eine Steigung (P2) umgekehrt bezüglich der Steigung (P1) der Schraube aufweist, um die Drehung der Mutter (12) in dieselbe Drehrichtung wie die Schraube (10) in einer zweiten Bewegungsphase (D2) der Mutter (12) zu erlauben, sowie mit einem Konpensationssystem (46), das zwischen dem ersten Organ (18) und einer beweglichen Stütze (14), die mit der Mutter (12) verbunden ist, gesetzt ist, um die Position dieses ersten Organs (18) bezüglich des zweiten Organs (20) zu reinitialisieren, derart, dass die erste und zweite Phase der Bewegung, die von den ersten und zweiten Führungseinrichtungen (34L und 34H) erzeugt werden, synchron bleiben mit den Phasen, die für eine Optimierung der Bewegung des ersten Organs notwendig sind,
**dadurch gekennzeichnet, dass** das Kompensationssystem eine Nacheilungsscheibe (68), die drehverbunden ist mit einer Nabe (50), die um die bewegliche Stütze (14) geschraubt ist, eine Messscheibe (80), die auf die bewegliche Stütze (14) mittels eines Mechanismus mit einem Freilaufmechanismus (76) montiert ist, und wenigstens eine Energiespeicherfeder (74) aufweist, die zwischen die Nacheilungsscheibe (68) und die Messscheibe (80) gesetzt ist, derart, dass die Speicherung des Abnutzungszustandes der Teile durch die relative Winkelposition der Messscheibe (80) und der beweglichen Stützte (14) konkretisiert wird, und dass während der zweiten Bewegungsphase (D2) der Mutter (12), die Notwendigkeit, eine Abnutzungsnacheilung durchzuführen, durch das Anschlagsetzten der Messscheibe (80) auf das bewegliche Organ (18) bewerkstelligt wird, wobei die Nacheilungsscheibe (68), die nunmehr durch die Nabe (50) in Drehung versetzt wird, die Feder(n) (74) bis zum Ende der Bewegung der beweglichen Stütze (14) zusammendrückt.

2. Klemm- oder Greifwerkzeug nach Anspruch 1, **dadurch gekennzeichnet, dass** der Freilaufmechanismus (76) die Drehung der beweglichen Stütze (14) in der Messscheibe (80) nur in eine Richtung (R) erlaubt.

3. Klemm- oder Greifwerkzeug nach Anspruch 1 oder 2, **dadurch gekennzeichnet, dass** die Feder(n) (74) berechnet ist (sind), um die für den Vorgang der Nacheilung und Freisetzung dieser Energie notwendige Energie zu speichern, wenn das Spannungsniveau zwischen der Nabe (50) und der beweglichen Stütze (14) ein Widerstandsmoment erzeugt, das geringer ist als jenes, das von der (den) Feder(n) bei Kompression erzeugt wird, wobei die Energiefreisetzung nur durch die Drehung der Nacheilungsscheibe (68) erfolgen kann, aufgrund der Tatsache, dass der Freilaufmechanismus (76) verhindert, dass sich die Messscheibe (80) dreht.

4. Klemm- oder Greifwerkzeug nach einem der Ansprüche 1 bis 3, **dadurch gekennzeichnet, dass** ausnahmsweise, wenn der Nacheilraum zu groß ist oder wenn die Feder(n) (74) einen maximalen Kompressionsgrad erreicht(erreichen), die Nacheilungsscheibe (68) und die Messscheibe (80) in ihrer Drehung blockiert werden, wodurch ein Relativmoment zwischen der beweglichen Stütze (14) und der Nabe (50) erzeugt wird, um eine Nacheilphase in Realzeit durchzuführen.

5. Klemm- oder Greifwerkzeug nach Anspruch 4, **dadurch gekennzeichnet, dass** nach der Nacheilphase in Realzeit und wenn das Belastungsniveau zwischen der beweglichen Stütze und der Nabe (50) abgenommen hat, die in der (den) Feder(n) (74) vor der Nacheilphase in Realzeit gespeicherte Energie in der Lage ist, die Nacheilphase zu verfeinern und die Gesamtheit der Spannungen, die durch diese Operation in der Kinematik erzeugt wird, wieder abfallen zu lassen.

6. Klemm- oder Greifwerkzeug nach einem der Ansprüche 1 bis 5, bei dem die Mutter (12), dank wenigstens einer Rolle (28), die lose auf einer Achse (YY), senkrecht zur Achse (XX) der Schraube (10), mit einer Buchse (30) zusammenwirkt, die durch eine zylindrische Seitenwand (32) konzentrisch zur Schraube (10) gebildet ist, und in der wenigstens eine schraubenförmige Nut (34) mit variabler Steigung, jedoch in umgekehrter Richtung bezüglich jener der Schraube eingeschnitten ist, einer Nut, in der die Rolle (28) rollt, **dadurch gekennzeichnet, dass** die Rolle (28) ein kegeliges Profil aufweist, während die entsprechende Kontaktseite der Nut (34) bezüglich der Achse (YY) der Rolle (28) um einen Wert wie die Erhöhung der Geschwindigkeit geneigt ist, so dass die hervorgerufene Beabstandung von der Achse (XX) des Kontaktpunktes zwischen der Rolle (28) und der zylindrischen Seitenwand (32) vollständig kompensiert wird durch die Erhöhung des Durchmessers der Rolle (28), in Abhängigkeit von diesem selben Beabstanden, wobei somit ein kontinuierlicher und homogener Kontakt zwischen der Rolle (28) und der Seite der Nut (34) sichergestellt wird, wobei keinerlei parasitäres Gleiten erzeugt wird, unabhängig von den relativen Werten der Dicke (E) der zylindrischen Seitenwand (32) der Buchse, des Durchmessers (D) der Buchse und des Durchmessers (d) der Rolle (28).

7. Klemm- oder Greifwerkzeug nach Anspruch 6, **dadurch gekennzeichnet, dass** sie mehrere koplanare Rollen (28) aufweist, damit die Kräfte, die auf ihrer Achse ihr kegeliges Profil erzeugt, sich auslöschen und keinerlei Belastung auf die Schraube hervorrufen.

8. Klemm- oder Greifwerkzeug nach Anspruch 7, **dadurch gekennzeichnet, dass** es zwei um 180° oder drei um 120° versetzte Rollen aufweist.

9. Klemm- oder Greifwerkzeug nach einem der Ansprüche 6 bis 8, **dadurch gekennzeichnet, dass** in jeder Rolle (28) ein Anschlag (88) vorgesehen ist, der ermöglicht, die axiale Kraft, die von dem kegeligen Profil der Rolle erzeugt wird, aufzunehmen.

10. Klemm- oder Greifwerkzeug nach Anspruch 6, **dadurch gekennzeichnet, dass** zwischen der Schraube (10) und der Mutter (12) ein mechanisches Spiel vorgesehen ist, das größer ist als der Zentrierungstoleranzwert der Mutter (12) durch die Rollen (28), um die Schraube (10) vor allen hyperstatischen Phänomenen, die sie schädigen könnten, zu schützen.
